(19) Europäisches Patentamt
European Patent Office
Office européen des brevets

(11) EP 1 005 514 B1

(12) **EUROPEAN PATENT SPECIFICATION**

(45) Date of publication and mention of the grant of the patent:
**29.10.2003 Bulletin 2003/44**

(21) Application number: **98940678.0**

(22) Date of filing: **21.08.1998**

(51) Int Cl.⁷: **C09J 4/06**, C08F 290/00, C03C 25/10

(86) International application number:
**PCT/NL98/00474**

(87) International publication number:
**WO 99/010443 (04.03.1999 Gazette 1999/09)**

(54) **LIQUID CURABLE RESIN COMPOSITION**

FLÜSSIGE, HÄRTBARE HARZZUSAMMENSETZUNG

COMPOSITION DE RESINE LIQUIDE ET SOLIDIFIABLE

(84) Designated Contracting States:
**BE DE FR GB IT**

(30) Priority: **22.08.1997 JP 24193397**

(43) Date of publication of application:
**07.06.2000 Bulletin 2000/23**

(73) Proprietors:
- **DSM N.V.**
  **6411 TE Heerlen (NL)**
- **JSR Corporation**
  **Tokyo 104-8410 (JP)**

(72) Inventors:
- **SUGIMOTO, Masanobu**
  **Tsukuba City 305 (JP)**
- **UCHIDA, Hiroshi, JSR Corporation**
  **Tokyo 104-8410 (JP)**
- **ABE, Hiroshi, JSR Corporation**
  **Tokyo 104-8410 (JP)**
- **UKACHI, Takashi**
  **Ibaraki 300-12 (JP)**

(74) Representative: **den Hartog, Jeroen H.J.**
**DSM Patents & Trademarks**
**Office Geleen**
**P.O. Box 9**
**6160 MA Geleen (NL)**

(56) References cited:
**WO-A-97/19898**

- **PATENT ABSTRACTS OF JAPAN vol. 014, no. 548, 5 December 1990 & JP 02 233704 A (SUMITOMO ELECTRONIC IND. CO.), 17 September 1990**
- **DATABASE WPI Derwent Publications Ltd., London, GB; AN 95-355418 XP002084969 & JP 07 242856 A (DSM DESOTECH INC; NIPPON GOSEI GOMU KK), 19 September 1995**
- **DATABASE WPI Derwent Publications Ltd., London, GB; AN 94-338311 XP002084970 & JP 06 263809 A (DSM NV; NIPPON GOSEI GOMU KK), 20 September 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 005 514 B1

Printed by Jouve, 75001 PARIS (FR)

## Description

The contents of Japanese Application No. 97-241933, filed August 15, 1997 is hereby incorporated in its entirety by reference.

## Field of the Invention

The present invention relates to a liquid curable resin composition exhibiting superior coatability at a high speed. especially to a liquid curable resin composition which is particularly suitable for use as a coating material for substrates such as optical fibers and matrix materials for optical fiber ribbons.

## Background of the Invention

In the production of optical fibers, a resin coating is applied for protection and reinforcement immediately after spinning the molten glass fiber. This process is called fiber drawing. A known structure of the resin coating consists of a primary coating layer of a flexible resin which is applied to the surface of optical fibers and a secondary coating layer of a rigid resin which is applied to the primary coating layer. Also, a ribbon coating layer structure, in which a plurality of elemental optical fibers is arranged in a plane and bond with a binder, is known in the application of elemental optical fibers coated with resin coating. A resin composition for forming the primary coating layer is called a soft coating, a resin composition for forming the secondary coating layer is called a hard coating, and a resin composition for forming the ribbon coating layer is called a ribbon matrix material. Each liquid material for these coatings is applied, followed by cure treatment to form a necessary coating layer.

Over the past several years, the quantity and quality demands of coated optical fiber, and optical fiber cable, has increased significantly. In response to these demands, the productivity requirements have increased. In particular, the fiber drawing speed or line speed has increased and the desire to further increase the drawing or line speed continues.

WO 97/19898 discloses a liquid curable coating composition suitable for coating an optical fiber which composition comprises an urethane oligomer containing an ethylenically unsaturated group, a monomer containing an ethylenically unsaturated group and a photopolymerisation initiator.

JP 02 233704 discloses a liquid curable resin composition suitable for coating onto an optical fiber which composition comprises a (meth)acrylic oligomer, a reactive diluent like 2-ethylhexyl (meth)acrylate and a polymerisation initiator.

If the viscosity of a liquid resin for coating is high in the fiber drawing process, this causes disconnection of fibers due to high shearing stress. If the viscosity of the liquid resin is low or the application temperature is raised in order to reduce the viscosity, the concern is that the viscosity of the liquid resin further decreases in a high shearing range because of the dependence of the viscosity on the shear rate. Therefore, a coating layer obtained by application and curing of the liquid resin varies in thickness and hence it is difficult to produce coated optical fiber with a uniform fiber diameter in a stable manner.

## Summary of the Invention

Accordingly, an object of the present invention is to provide a liquid curable resin composition suitable for use as coating materials, especially as the hard coating, coated on optical fibers which makes possible the stable preparation of coated optical fiber having a uniform fiber diameter even in a high speed fiber drawing process.

The above objects can be attained in the present invention by a liquid curable resin composition comprising:

(A) a polymerizable oligomer also referred to as a polymer having at least one (meth)acrylate group in a molecule (hereinafter called "component (A)") ;
(B) a reactive diluent (hereinafter called "component (B)") having a number average molecular weight of less than 1,000 and a viscosity lower than component A; and
(C) a polymerization initiator (hereinafter called "component (C)"),

wherein the viscosity of the liquid curable resin composition is in a range of from 0.5 to 3 Pascal seconds (500 to 3000 cps) at 40°C and the activation energy for fluidization is in a range of 1 to 60 kJ/mol.

## Detailed description of the invention and preferred embodiments

The present invention will now be explained in detail by way of an exemplary embodiment. Herein certain

terms, unless otherwise specified, are understood to have the following meaning:

"(meth)acrylic acid" refers to substituted and unsubstituted acrylic acid, methacrylic acid and mixtures thereof, with unsubstituted (meth)acrylic acid being preferred;
"(meth)acryloyl group" refers to a substituted and unsubstituted acryloyl group, methacryloyl group and mixtures thereof, with the unsubstituted (meth)acryloyl group being preferred;
"(meth)acrylic acid" refers to substituted and unsubstituted acrylic acid, methacrylic acid and mixtures thereof, with unsubstituted (meth)acrylic acid being preferred;
"(meth)acryloyl group" refers to a substituted and unsubstituted acryloyl group, methacryloyl group and mixtures thereof, with the unsubstituted (meth)acryloyl group being preferred;
"(meth)acrylate" refers to substituted and unsubstituted acrylate, methacrylate, and mixtures thereof, with unsubstituted (meth)acrylate being preferred;
"number average molecular weight" refers to the number average molecular weight as determined by gel permeation chromatography.

**(A) Polymerizable oligomer Or Polymer Containing At Least One (Meth)Acrylate Group**

Examples of polymerizable compounds, suitable for use as or as part of component (A), include polymerizable compounds having at least one terminal (meth)acrylate group and a number average molecular weight of from 500 to 30,000 (hereinafter these compounds are called "terminal (meth)acrylate group-containing polymerizable compounds" (referred to herein as component A-1)); and polymerizable compounds having a (meth)acrylate group in a side chain thereof and a number average molecular weight of from 5,000 to 500,000 (hereinafter these compounds are called "side chain (meth)acrylate group-containing polymerizable compound" (referred to herein as component A-2)). These compounds may be used either independently or in combinations of two or more. Preferably, the A-1 compound contains on average between 1.6 and 4.5 (meth)acrylate groups, in particular between 1.9 and 3.2. Preferably, the A-2 compound contains on average between 1.6 and 20 (meth)acrylate groups, more preferably between 1.9 and 10.

**Terminal (moth)acrylate group-containing polymerizable compound (A-1)**

The polymerizable compound (A-1) is a compound having a (meth)acrylate group at one or more molecular chain terminals thereof and can be produced by reacting (a) a polyol, (b) a diisocyanate, and (c) a hydroxyl group-containing (meth)acrylate, in any conventional manner. More preferably, the polymerizable compound could be formed by first reacting an isocyanate group of diisocyanate with hydroxyl groups of the polyol and then with the (meth)acrylate containing a hydroxyl group.
The reaction can be carried out, for example, by a method in which polyol, diisocyanate, and (meth)acrylate containing a hydroxyl group are placed in a reactor and reacted by a batch-process; a method in which polyol is first reacted with diisocyanate and then the reactant is reacted with (meth)acrylate containing a hydroxyl group; a method in which diisocyanate is first reacted with (meth)acrylate containing a hydroxyl group and then the reactant is reacted with polyol; or a method in which diisocyanate is first reacted with (meth)acrylate containing a hydroxyl group, then the reactant is reacted with polyol, and finally the resulting reactant is reacted with (meth)acrylate containing a hydroxyl group; and the like.

(a) Polyol, (b) diisocyanate, and (c) (meth)acrylate containing a hydroxyl group, which are used to produce terminal (meth)acrylate group-containing polymerizable compound (A-1) are now explained in this order.

**(a) Polyol**

Examples of suitable polyols include a polyether diol, polyester diol, polycarbonate diol, and polycaprolactone diol are given. Polyols other than these polyols may also be used. These polyols may be used either independently or in combinations of two or more. In the case where the polyol is composed of two or more structural units, there are no limitations on the type of polymerization and it may be any of random polymerization, block polymerization, or graft polymerization.
Examples of useful polyether diols include aliphatic type polyether diols, alicyclic type polyether diols, and polyether diols having an aromatic ring. Given as examples of the aliphatic type diol are polyalkylene glycols such as polyethylene glycol, polypropylene glycol, polytetramethylene glycol, polyhexamethylene glycol, polyheptamethylene glycol, polydecamethylene glycol, and the like; polyether diols obtained by the ring-opening copolymerization of two or more ion-polymerizable cyclic compounds; polyether diols obtained by the ring-opening copolymerization of an ion-polymerizable compound and a cyclic imine such as ethylene imine, cyclic lactic acid such as β-propiolactone, glycolic

acid lactide, or the like, or dimethylcyclopolysiloxane, and the like. Examples of the ion-polymerizable cyclic compounds include cyclic ethers such as ethylene oxide, propylene oxide, butene-1-oxide, isobutene oxide, 3,3-bischloromethyl oxetane, tetrahydrofuran, 2-methyl tetrahydrofuran, 3-methyl tetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, and benzoic acid glycidyl ester. Examples of the polymers obtained by the ring-opening copolymerization of two or more of the above-mentioned ion-polymerizable cyclic compounds include a binary copolymer composed of two monomers such as a copolymer of tetrahydrofuran and propylene oxide, copolymer of tetrahydrofuran and 2-methyl tetrahydrofuran, copolymer of tetrahydrofuran and 3-methyl tetrahydrofuran, copolymer of tetrahydrofuran and ethylene oxide, copolymer of propylene oxide and ethylene oxide, and copolymer of butene-1-oxide and ethylene oxide; and a ternary copolymer composed of combinations of three monomers such as a copolymer of tetrahydrofuran, butene-1-oxide, and ethylene oxide. These ring-opening copolymers may be either a random copolymer or a block copolymer of these ion-polymerizable cyclic compounds.

These aliphatic type polyether polyols may be commercially available under the trademarks PTMG650, PTMG1000, PTMG2000 (manufactured by Mitsubishi Chemical Corp.), PPG-400, PPG1000, PPG2000, PPG3000, EXCENOL720, 1020, 2020 (manufactured by Asahi Oline Co., Ltd.), PEG1000, Unisafe DC1100, DC1800 (manufactured by Nippon Oil and Fats Co., Ltd.), PPTG2000, PPTG1000, PTG400, PTGL2000 (manufactured by Hodogaya Chemical Co., Ltd.), and Z-3001-4, Z-3001-5, PBG2000A, PBG2000B (manufactured by Daiichi Kogyo Seiyaku Co., Ltd.).

Examples of the polyether polyol having an aromatic ring, or aromatic polyether polyols, include alkylene oxide addition diol of bisphenol A; alkylene oxide addition diol of bisphenol F; hydrogenated bisphenol A, hydrogenated bisphenol F; alkylene oxide addition diol of hydrogenated bisphenol A; alkylene oxide addition diol of hydrogenated bisphenol F; alkylene oxide addition diol of hydroquinone; alkylene oxide addition diol of naphthohydroquinone; and alkylene oxide addition diol of anthrahydroquinone. Among these compounds, alkylene oxide addition diol of bisphenol A and the like are preferable.

Examples of polyether polyols having an alicyclic structure include 1,4-cyclohexane diol and its alkylene oxide addition diol, tricyclodecane diol, tricyclodecane dimethanol, pentacyclopentadecane diol, and pentacyclopentadecane dimethanol. Among these compounds, tricyclodecane dimethanol is preferable.

These polyols having an aromatic ring or an alicyclic structure are available as commercial compounds under the trademarks Uniol DA400, DA700, DA1000, DB400 (manufactured by Nippon Oil and Fats Co., Ltd.) and SA1002 (manufactured by Mitsubishi Chemical Corp.).

Given as examples of polyester polyols are polyester diols obtained by the reaction of a polyhydric alcohol and polybasic acid. Examples of the polyhydric alcohol include ethylene glycol, polyethylene glycol, propylene glycol, polypropylene glycol, tetramethylene glycol, polytetramethylene glycol, 1,6-hexanediol, neopentyl glycol, 1,4-cyclohexanedimethanol, 3-methyl-1,5-pentane diol, 1,9-nonane diol, and 2-methyl-1,8-octane diol. Examples of the polybasic acid include phthalic acid, isophthalic acid, terephthalic acid, maleic acid, fumaric acid, adipic acid, and sebacic acid. These polyester polyols are commercially available under the trademarks, for example, Kurapol P-2010, PMIPA, PKA-A, PKA-A2, and PNA-2000 (manufactured by Kuraray Co., Ltd.).

As examples of polycarbonate polyols, polycarbonate of polytetrahydrofuran, polycarbonate of 1,6-hexanediol, and commercially available products such as DN-980, 981, 982, 983 (manufactured by Nippon Polyurethane Industry Co., Ltd.), PC-8000 (manufactured by PPG of the US), PC-THF-CD (manufactured by BASF), and the like are given.

As examples of polycaprolactone polyols, polycaprolactone polyols obtained by the reaction of e-caprolactone and a diol, such as ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, or 1,4-butanediol are given. Diols used as raw materials can be obtained as commercially available products, such as PLACCEL 205, 205AL, 212, 212AL, 220, 220AL (manufactured by Daicel Chemical Industries, Ltd.).

Diamines can be used together with the above-mentioned polyols to produce terminal (meth)acrylate group-containing polymerizable compound (A-1). Examples of such a diamine include diamines such as ethylenediamine, tetramethylenediamine, hexamethylenediamine, paraphenylenediamine, and polyether diamines including diamines containing a heteroatom, such as 4,4'-diaminodiphenylmethane and the like.

The molecular weight of polyol (a) is preferably from 50 to 15,000 and more preferably from 100 to 8,000 in terms of a number average molecular weight.

**b) Diisocyanate**

Given as examples of diisocyanates include substituted and unsubstituted aromatic diisocyanates, alicyclic diisocyanates, hydrogenated aromatic diisocyanates, aong these substituted aromatic diisocyanates and alicyclic diisocyanates are particularly preferred. The following list includes examples of such diisocyantes: 2,4-tolylene diisocyanate, 2,6-tolylene diisocyanate, 1,3-xylene diisocyanate, 1,4-xylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis (2-isocyanate-ethyl) fumarate, 6-isopropyl-1,3-phenyl diisocyanate, 4-diphenylpropane diisocyanate, lysine diisocyanate, hydrogenated diphenylmethane diisocyanate, hydrogenated xylene diisocyanate, tetramethylxylene diisocyanate, 2,5-bis(isocyanatemethyl)-bicyclo[2.2.1]heptane, and 2,6-bis(isocyanatemethyl)-bicyclo[2.2.1]heptane. Among these diisocyanates, 2,4-tolylene diisocyanate, isophorone diisocyanate, 1,3-xylene diisocyanate, 1,4-xylene diisocyanate, and methylenebis(4-cyclohexylisocyanate) are particularly preferred. These diisocyanates may be used either singly or in combinations of two or more.

**(c) (Meth)acrylate containing a hydroxyl group**

Examples of useful (meth)acrylates having a hydroxyl group include hydroxyalkyl (meth)acrylates, hydroxyaryl (meth)acrylates, methacrylate containing - diols, -triols and polyols such as, for example, 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri (meth)acrylate, dipentaerythritol penta(meth)acrylate, (meth)acrylates represented by the following structural formulae (1) or (2),

$$CH_2=C(R_1)\text{-}COOCH_2CH_2\text{-}[OCO(CH_2)_5]_n\text{-}OH \quad (1)$$

$$CH_2=C(R_1)\text{-}COOCH_2CH(OH)CH_2\text{-}O\text{-}(C_6H_5)\ (2) \quad (2)$$

wherein $R_1$ represents a hydrogen atom or a methyl group and n represents an integer from 1-15. In addition, compounds obtained by an addition reaction between a compound containing a glycidyl group, such as alkyl glycidyl ether, allyl glycidyl ether, or glycidyl (meth)acrylate, and (meth)acrylic acid can also be used.

Among these (meth)acrylates containing a hydroxyl group, particularly desirable are hydroxyalkyl (meth)acrylates, preferably 2-hydroxyethyl (meth)acrylate and 2-hydroxypropyl (meth)acrylate.

The (meth)acrylates containing a hydroxyl group may be used either singly or in combinations two or more.

In the synthesis of terminal (meth)acrylate-containing polymerizable compound (A-1), the proportion of the polyol (a), diisocyanate (b), and (meth)acrylate (c) containing a hydroxyl group components are preferably designed so that for each hydroxyl group contained in the polyol (a) component there is 1.1 to 3 equivalents of isocyanate groups contained in the diisocyanate (b) component and 0.2 to 1.5 hydroxyl groups contained in (meth)acrylate containing a hydroxyl group component.

It is possible to replace a part of the (meth)acrylate having a hydroxyl group with the compound having a functional group which can add to an isocyanate group. Such a compound is typified by g-mercaptopropyltrimethoxysilane, g-aminotrimethoxysilane, and the like. Adhesion properties to substrates such as glass can be improved by using these compounds when the composition of the present invention is cured.

In the reaction of polyol (a), diisocyanate (b), and (meth)acrylate containing a hydroxyl group (c), it is desirable to use a urethane forming catalyst, such as copper naphthenate, cobalt naphthenate, zinc naphthenate, di-n-butyltin dilaurate, triethylamine, 1,4-diazabicyclo[2.2.2]octane, or 2,6,7-trimethyl-1,4-diazabicyclo[2.2.2]octane, in the amount of 0.01-1 part by weight for 100 parts by weight of the total reaction products. The reaction temperature may range from 10-90°C, preferably 30-80°C.

As other examples of terminal (meth)acrylate group-containing polymerizable compound (A-1), urethane (meth)acrylate prepared by reacting 2 mols of (meth)acrylate containing a hydroxyl group with 1 mol of diisocyanate can be given. As the isocyanate and the (meth)acrylate containing a hydroxyl group, which are used for the synthesis of this urethane (meth)acrylate, the above-mentioned compounds may be used. Specifically, examples of such a urethane (meth)acrylate include a reaction product of hydroxyethyl (meth)acrylate and 2,4-tolylene diisocyanate, a reaction product of 2-hydroxyethyl (meth)acrylate and 2,5- or 2,6-bis(isocyanate methyl)-bicyclo[2.2.1]heptane, a reaction product of 2-hydroxyethyl (meth)acrylate and isophorone diisocyanate, a reaction product of 2-hydroxypropyl (meth)acrylate and 2,4-tolylene diisocyanate, and a reaction product of 2-hydroxypropyl (meth)acrylate and isophorone diisocyanate.

The molecular weight of terminal (meth)acrylate group-containing polymerizable compound (A-1) is preferably

from 500 to 30,000 and more preferably from 1,500 to 10,000 in terms of a number average molecular weight. If the number average molecular weight is less than 500, the viscosity increases and hence there is a case where the tension applied to fiber is too large when fiber drawing speed is increased, which sometimes causes the disconnection of fiber. On the other hand, if the number average molecular weight exceeds 30,000, the curing rate of the composition to be obtained decreases, leading to a reduction in the yield of optical fiber.

**Side chain (math)acrylate group-containing polymerizable compound (A-2)**

Typical examples of the side chain (meth)acrylate group-containing polymerizable compound (A-2) include acrylated acrylic copolymers (hereinafter called "side chain (meth)acrylate group-containing copolymer") including those comprising at least one of each of the structural units represented by the following formulae (3) and (4) and at least one (meth)acrylate group which is designed to constitute a side chain in the molecule:

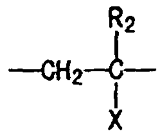

(3)

wherein $R_2$ represents a hydrogen atom or a methyl group; X is a group represented by the formula $-COOR_3$ wherein $R_3$ represents a hydrogen atom or a substituted or non-substituted hydrocarbon group having 1-30 carbon atoms, an aryl group, a cyano group, a halogen atom, or an alkyl group having 1-10 carbon atoms.

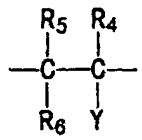

(4)

wherein $R_4$ represents a hydrogen atom or a methyl group; $R_5$ and $R_6$, which may be the same or different, respectively represent a hydrogen atom or a halogen atom such as a fluorine atom, a chlorine atom, or a bromine atom; and Y represents an organic group containing a (meth)acryloyloxy group.

In the formula $-COOR_3$ represented by X in the general formula (3), $R_3$ may be a substituted or non-substituted hydrocarbon group having 1-30 carbon atoms. Examples of $R_3$ include a linear, branched, or cyclic alkyl group, linear, branched, or cyclic alkenyl group, aryl group, aralkyl group, and polycyclic hydrocarbon groups. These groups may be substituted. Among these groups, a linear, branched, cyclic alkyl group having 1-10 carbon atoms and a linear, branched, cyclic alkenyl group having 2-10 carbon atoms are preferable. Examples of the aryl group shown by X include a phenyl group, halophenyl group substituted with a halogen atom such as a chlorine atom, fluorine atom, bromine atom, or the like, methylphenyl group, methoxyphenyl group, and trialkylsilylphenyl group such as a trimethylphenyl group and the like. Among these groups, a phenyl group and a methylphenyl group are particularly preferable. Examples of the halogen atom represented by X include chlorine atom, fluorine atom, and bromine atom. Examples of the alkyl group having 1-10 carbon atoms, which is represented by X, include a linear, branched, or cyclic alkyl group, for example, a methyl group, ethyl group, propyl group, isopropyl group, butyl group, amyl group, isobutyl group, t-butyl group, pentyl group, isoamyl group, hexyl group, heptyl group, octyl group, isooctyl group, 2-ethylhexyl group, nonyl group, decyl group, isodecyl group, and cyclohexyl group.

Examples of the organic group containing the (meth)acryloyloxy group represented by Y in the general formula (4) include a group represented by the formula $-A-B-OCOCR_7=CH_2$, wherein A represents a group - COO-, a phenylene group, or an alkylene group having 1-6 carbon atoms; B represents an alkylene group having 1-6 carbon atoms, which may have a hydroxyl group, and $R_7$ represents a hydrogen atom or a methyl group.

The (meth)acrylate group-containing copolymer (A-2) must include at least one group defined by each of formula (3) and (4).

The number average molecular weight of the side chain (meth)acrylate group-containing copolymer is generally from 5,000 to 500,000 and preferably from 10,000 to 200,000. If the molecular weight is not greater than 5,000, the viscosity of the resulting liquid composition of the present invention decreases, leading to a reduction in the coatability to optical fiber. If the molecular weight exceeds 500,000, the viscosity of the resulting liquid increases excessively and hence there is a case where the coatability to optical fiber decreases.

The side chain (meth)acrylate group-containing copolymer can be synthesized by the following processes. Specifically, an ethylene type compound which is capable of vinyl polymerization and represented by the general formula (5) described below and an ethylene type compound which has an organic group Z with a functional group capable of introducing a (meth)acryloyloxy group represented by the general formula (6) and which is capable of vinyl polymerization are copolymerized to prepare a copolymer including the structural unit represented by the above general formula (3) and a structural unit represented by the general formula (7).

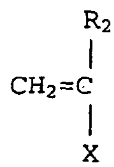

(5)

wherein $R_2$ and X are the same as defined above;

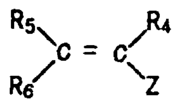

(6)

wherein $R_4$, $R_5$ and $R_6$ are the same as defined above and Z represents an organic group containing a functional group selected from a group consisting of a hydroxyl group, an epoxy group, and the like;

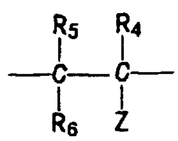

(7)

wherein $R_4$, $R_5$, $R_6$ and Z are the same as defined above.

Then, the functional group of organic group Z contained in the structural unit represented by general formula (7) constituting the copolymer is reacted with a (meth)acrylate compound containing a hydroxyl group, (meth)acrylic acid, (meth)acrylate compound containing a carboxyl group, (meth)acrylic acid anhydride, (meth)acrylic acid halide, (meth)acrylate compound, anhydrous (meth)acrylic acid, anhydrous maleic acid, or the like to introduce a (meth)acrylate group into the side chain, thereby synthesizing the side chain (meth)acrylate group-containing copolymer.

As examples of the ethylene compound represented by general formula (5), (meth)acrylic acid type compounds, styrene type compounds, acrylonitrile, and halogenated vinyl compounds are given. Given as specific examples of the (meth)acrylic type compound are (meth)acrylic acid, susbtituted and unsubstituted alkyl(meth)acrylates, alicyclic(meth)acrylates, aryl(meth)acrylates including methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, octadecyl (meth)acrylate, stearyl (meth)acrylate, benzyl (meth) acrylate, cyclohexyl (meth)acrylate, phenyl (meth)acrylate, dicyclopentanyl (meth)acrylate, dicyclopentenyl (meth)acrylate, tricyclodecanyl (meth)acrylate, isobornyl (meth)acrylate, and bornyl (meth)acrylate. Among these, methyl (meth) acrylate, ethyl (meth)acrylate, butyl (meth)acrylate, 2-ethylhexyl (meth)acrylate, isobornyl (meth)acrylate, and dicyclopentenyl (meth)acrylate are preferable.

Examples of the styrene type compound include styrene, α-methylstyrene, p-bromostyrene, p-chlorostyrene, p-methoxystyrene, p-methylstyrene, and p-trialkylsilylstyrene. Among these, styrene and α-methylstyrene are particularly preferable.

Examples of the halogenated vinyl compound include vinyl chloride, 1,1-dichloroethylene, 1,2-dichloroethylene, vinyl bromide, fluoroethylene, 1,1-difluoroethylene, 1,2-difluoroethylene, trifluoroethylene, and tetrafluoroethylene. Among these halogenated vinyl compounds, vinyl chloride, 1,1-dichloroethylene, fluoroethylene, 1,1-difluoroethylene, 1,2-difluoroethylene, trifluoroethylene, and tetrafluoroethylene are particularly preferable.

Examples of the compound having organic group Z with a functional group in the ethylene type compound represented by general formula (6) for introducing a (meth)acryloyloxy group include (meth)acrylate compounds having a hydroxyl group, (meth)acrylate compounds having an epoxy group, allyl compounds having an epoxy group, and styrene compounds having a hydroxyl group added to a benzene ring. Given as specific examples of these compounds are 2-hydroxyethyl (meth)acrylate, 2-hydroxypropyl (meth)acrylate, 2-hydroxybutyl (meth)acrylate, glycidyl (meth)acrylate, allylglycidyl (meth)acrylate, and p-hydroxystyrene. Among these compounds, 2-hydroxyethyl (meth)acrylate and glycidyl (meth)acrylate are preferable.

There are no specific limitations to the polymerization process of polymerizing the ethylene type compounds of general formulae (5) and (6) and any of a cation polymerization process, anion polymerization process, polymerization process using a Ziegler-Natta catalyst, and the like may be used. Also, an emulsion polymerization process may be used. In the polymerization, a solvent may be either used or not.

As above-mentioned, (meth)acrylic acid, maleic acid, fumaric acid, (meth)acrylilate, anhydrous (meth)acrylic acid, anhydrous maleic acid, (meth)acrylate containing a hydroxyl group, and the like are given as examples of compounds used for introducing (meth)acryl groups reacting with the structural units of general formulae (3) and (4). These compounds are selected corresponding to the sort of functional group contained in organic group Z of the ethylene type compound represented by general formula (6) which is a co-reactant. Specifically, when organic group Z has a hydroxyl group, anhydrous (meth)acrylic acid and anhydrous maleic acid are particularly preferable though any compound capable of reacting with the epoxy group and introducing a (meth)acryl group may be used other than (meth) acrylate compounds containing a hydroxyl group. When organic group Z has an epoxy group, (meth)acrylic acid compounds containing a hydroxyl group are particularly preferable though any of the compounds exemplified as the reaction component with the functional group contained in the above organic group Z can be used.

A solvent may be optionally selected in this reaction. Also, in this reaction, an appropriate catalyst may be used. As the catalysts, materials of amine-type or ammonium chloride type are exemplified. The amount of the structural unit of formula (4) having the (meth)acrylate group to be introduced is preferably in a range of from 1 to 50% by mol and more preferably from 2 to 30% by mol for all structural units contained in the side chain (meth)acrylate-containing copolymer. Therefore, the proportion of the ethylene type compound of formula (6) in the reaction between the ethylene type compounds of formulae (5) and (6) may be from 1 to 50% by mol and preferably from 2 to 30% by mol.

The side chain (meth)acrylate group-containing copolymer are commercially available under the trademarks B-3000, B-3001, B-3002, B-3003, B-3004, B-3005, B-3006, AP-2150 (manufactured by Shin-Nakamura Chemical Co., Ltd.), and the like.

**(B) Reactive diluent**

As the reactive diluent used as component (B) in the composition of the present invention, monofunctional compounds and polyfunctional compounds are exemplified. In order to function as a reactive diluent, the viscosity of this component should be lower than the viscosity of component A.The number average molecular weight of each of these compounds is less than 1,000 and preferably from 100 to 800. If the number average molecular weight exceeds 1,000, the viscosity of the resulting composition is too great, which sometimes has an adverse influence on the application characteristics.

Examples of the monofunctional compound are N-vinylpyrrolidone, vinyl group containing lactam such as N-vinylcaprolactam and the like, isobornyl (meth)acrylate, bornyl (meth)acrylate, tricyclodecanyl (meth)acrylate, dicyclopentanyl (meth)acrylate, dicyclopentenyl (meth)acrylate, alicyclic structure containing (meth)acrylate such as cyclohexyl (meth)acrylate and the like, benzyl (meth)acrylate, 4-butylcyclohexyl (meth)acrylate, acryloylmorpholine, vinylimidazole, vinylpyridine and the like.

Other suitable monofunctional compounds include hydroxy alkyl(meth)acrylates, alkyl(meth)acrylates, alkoxyalkyl (meth)acrylates, aryl(meth)acrylates, and aryloxyalkyl(meth)acrylates. Preferred mono-(meth)acrylate compounds include, for example, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth) acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether,

lauryl vinyl ether, cetyl vinyl ether, 2-ethylhexyl vinyl ether, and the compounds represented by the following formula (8).

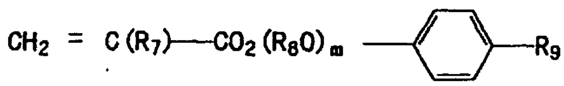

(8)

wherein $R_7$ represents a hydrogen atom or a methyl group; $R_8$ independently represents an alkylene group having 2-6 and preferably 2-4 carbon atoms such as ethylene and propylene; $R_9$ represents a hydrogen atom or an alkyl group having 1-12 and preferable 1-9 carbon atoms such as a n-nonyl group; and m denotes an integer from 0 to 12 and preferably from 1 to 8.

As examples of the compound of general formula (8), (meth)acrylate esters of ethylene oxide or propylene oxide addition phenol or nonylphenol are given.

Among these monofunctional compounds, N-vinylpyrrolidone, N-vinylcaprolactam, isobornyl acrylate, lauryl acrylate, acryloylmorpholine are especially desirable.

These monofunctional compounds can be commercially available under the trademarks, for example, Aronix M-111, M-113, M-114, M-117 (manufacture by Toagosei Co., Ltd.); IBXA, Viscoat 3700 (manufactured by Osaka Organic Chemical Industry, Ltd.) and the like.

Also, given as examples of the polyfunctional compound are trimethylolpropane tri(meth)acrylate, pentaerythritol tri(meth)acrylate, ethylene glycol di(meth)acrylate, tetraethylene glycol di(meth)acrylate, polyethylene glycol di (meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hydroxyethyl)isocyanurate tri(meth)acrylate, tris(2-hydroxyethyl) isocyanurate di(meth)acrylate, tricyclodecane dimethanol di(meth)acrylate, di(meth)acrylate of diol of ethylene oxide or propylene oxide addition bisphenol A, di(meth)acrylate of diol of ethylene oxide or propylene oxide addition hydrogenated bisphenol A, epoxy (meth)acrylate produced by adding (meth)acrylate to diglycidyl ether of bisphenol A, and triethylene glycol divinyl ether. Among these compounds, tricyclodecane dimethanol di(meth)acrylate, di(meth)acrylate of diol of ethylene oxide addition of bisphenol A, and epoxy (meth)acrylate produced by adding (meth)acrylate to diglycidyl ether of bisphenol A are preferable.

These polyfunctional compounds can be commercially available under the trademarks, for example, Yupimer UV SA1002 (tricyclodecane dimethanol diacrylate), SA2007 (manufactured by Mitsubishi Chemical Corp.); Viscoat 700 (manufactured by Osaka Organic Chemical Industry, Ltd.); KAYARAD R-604, DPCA-20.-30,-60,-120, HX-620, D-310, D-330 (manufactured by Nippon Kayaku Co., Ltd.); Aronix M-210, M-215, M-315, M-325 (manufactured by Toagosei Co., Ltd.), and the like.

These reactive diluents may be used either independently or in combinations of two or more. Preferable combinations of these diluents include, for example, a combination of N-vinyl pyrrolidone and tricyclodecane dimethanol diacrylate and a combination of isobornyl acrylate and tricyclodecane dimethanol diacrylate.

It is desirable that the reactive diluents, which are component (B), be used in a proportion of from 10 to 200 parts by weight and preferably from 20 to 150 parts by weight per 100 parts by weight of component (A). If the proportion of component (B) is too small, the viscosity of the resulting composition of the present invention is too high and the temperature dependency of the viscosity is large, leading to unstable application conditions. On the other hand, if the proportion is too large, the viscosity is too low and hence the configuration of the resulting coating is unstable because a designed application condition is not maintained when the resulting liquid composition is applied to optical fiber.

**(C) Polymerization initiator**

As the polymerization initiator of component (C) used in the present invention, one or more of compounds selected from thermal initiators and radiation active initiators may be used.

When the liquid curable resin composition of the present invention is cured by heat, a conventional thermal initiator such as a peroxide, an azo compound, or the like may be used. Specific examples of the thermal initiator include peroxides such as benzoyl peroxide, t-butyl-oxybenzoate and azo compounds such as azobisisobutylonitrile and the like.

Also, when the liquid curable resin composition of the present invention is cured by radiation, it is desirable to use a radiation active initiator and to add, as required, a compound known as a photosensitizer. Conventionally known radiation active initiators or photosensitizers may be used. Given as examples of compounds used as the radiation active initiator are 1-hydroxycyclohexylphenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone Michler's ketone, benzoin propyl ether, benzoin

ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propane-1-one, 2,4,6-trimethylbenzoyldiphenylphosphine oxide, and bis-(2,6-dimethoxybenzoyl)-2,4,4-trimethylpentylphosphine oxide. Among these compounds, 1-hydroxycyclohexylphenyl ketone, 2,2-dimethoxy-2-phenylacetophenone, 2-methyl-1-[4-(methylthio)phenyl]-2-morpholinopropane-1-one, 2,4,6-trimethylbenzoyldiphenylphosphine oxide, and bis(2,6-dimethoxybenzoyl)-2,4,4-trimethylpentylphosphine oxide are preferable. These radiation active initiators are commercially available under the trademarks IRGACURE 184, 369, 651, 500, 907, CGI1700, CGI1750, CGI1850, CG24-61 (manufactured by Ciba-Geigy Ltd.); Lucirin LR8728 (manufactured by BASF); Darocur 1116, 1173 (manufactured by Merck Co.); Ubecryl P36 (manufactured by UCB) and the like.

Examples of compounds used as the photosensitizer include triethylamine, diethylamine, N-methyldiethanolamine, ethanolamine, 4-dimethylaminobenzoic acid, methyl 4-dimethylaminobenzoate, ethyl 4-dimethylaminobenzoate, and isoamyl 4-dimethylaminobenzoate. Among these, triethylamine and ethanolamine are desirable. These photosensitizers are commercially available under the trademarks Ubecryl P102, 103, 104, 105 (manufactured by UCB), and the like.

Maleimide type compounds are also known to be useful as photopolymerisation initiating compounds, in particular in combination with benzophenone or the like, optionally in combination with amines.

When the liquid curable resin composition of the present invention is cured using a combination of heat and radiation, it is desirable to use the foregoing thermal initiator and radiation active initiator in combination. The polymerization initiator (C) is formulated in a proportion of from 0.1 to 10 parts by weight and preferably from 0.5 to 7 parts by weight for 100 parts by weight of the above component (A).

The liquid composition of the present invention may include, other than the above essential components (A) to (C), various additives such as antioxidants, coloring materials, UV absorbers, light-stabilizers, silane coupling agents, thermal polymerization inhibitors, leveling agents, surfactants, preservatives, plasticizers, lubricants, solvents, fillers, aging preventives, wettability improvers, coating surface improvers and the like as required.

The viscosity of the liquid curable resin composition of the present invention is generally from 500 to 3000 cp and preferably about 1000 cp or higher, and preferably about 2000 cp or lower at 40°C. If the viscosity is less than 500 cp or exceeds 3000 cp, coated fiber with a uniform fiber diameter cannot be prepared in a stable manner when high speed application is performed.

The activation energy for fluidization of the liquid curable resin composition of the present invention is from 1 up to 60 kJ/mol and preferably from 10 to 60 kJ/mol, more preferably from 35 to 60. If the activation energy for fluidization is not greater than 1 kJ/mol or exceeds 60 kJ/mol, coated fiber with a uniform fiber diameter cannot be prepared in a stable manner in a high speed fiber drawing step. Here, the activation energy for fluidization is defined by the Andrade's equation viscosity formula and can be calculated from the inclination of the graph formed by Arrhenius-plotting the relation of viscosity vs temperature. In case for a given formulation, a man skilled in the art finds that the energy of fluidisation is too high, he can increase the molecular weight of the backbone and/or lower the amount of oligomer in the composition. Other factors influence the activation energy of fluidisation as well, such as the amount and type of diluent (B), which effects can be easily determined by the man skilled in the art through mesurements as teached in the present specification.

The liquid curable resin composition of the present invention is cured by heat and/or radiation. Here, the radiation includes infrared rays, visible rays, ultraviolet rays, X-rays, electron rays, α-rays, β-rays, γ-rays and the like. Preferably, the resin is cured with visible and UV light.

The composition of the present invention preferably is used as a secondary, relatively hard, coating to protect an optical glass fiber. Such secondary coating preferably has a Youngs modulus of 20-100 kg/$mm^2$ at 25°C. Preferably, the Tg as measured by the peak-Tan δ in a DMA curve is between 20°C and 100°C, more preferably between 40°C and 80°C. Hence, the radiation curable composition preferably is formulated to be used as a secondary coating for optical glass fibers.

The invention further provides a process for the preparation of a coated optical glass fiber comprising the steps of

i) drawing an optical glass fiber from a pre-form
ii) coating the optical glass fiber with a liquid, radiation curable composition adapted to provide a soft primary coating
iii) further coating the primary coated optical glass fiber with a liquid, radiation curable composition according to this invention, adapted to provide a hard secondary coating

wherein the drawing speed or line speed is about 1000 m/min or higher and wherein each coating is cured. Preferably, the drawing speed is about 1200 m/min or higher. Typically, the drawing speed or line speed is lower than 2400 m/min.

The primary and secondary coatings both are cured, preferably using UV-vis light or EB, most preferably using UV-light. The coatings may be cured sequentially or simultaneously in so-called wet-on-dry or wet-on-wet processes with wet-on-dry being preferred.

## EXAMPLES

The following examples are given as particular embodiments of the invention and to demonstrate the practice and advantages thereof. It is understood that the examples are given by way of illustration and are not intended to limit the specification or the claims that follow in any manner.

In the examples hereinafter "parts by weight" is simply described as "parts".

### Example 1

8.7 g of 2,4-tolylene diisocyanate, 0.02 g of 2,6-di-t-butyl-p-cresol, 0.63 g of dibutyltin dilaurate, 0.007 g of phenothiazine, and 21.3 g of isobornyl acrylate were placed in a reaction vessel equipped with a stirrer and ice-cooled until the liquid temperature was below 10°C while stirring. Then, 3.8 g of 2-hydroxyethyl acrylate was added dropwise to the mixture while stirring to maintain the temperature below 20°C. After the addition was finished, the resulting mixture was further stirred for one hour to react. Next, 65.6 g of polytetramethylene glycol having a number average molecular weight of 2000 was added to the reaction mixture and stirring of the resulting mixture was continued for 4 hours at a liquid temperature of 50 to 60°C. It was estimated that the reaction was completed when the amount of residual isocyanate was below 0.1% by weight. To 100 g of the composition including components (A) and (B) prepared in this manner, 14.2 g of isobornyl acrylate, 6.3 g of N-vinylcaprolactam, and 7.3 g of lauryl acrylate were added and the mixture was stirred for 30 minutes at a liquid temperature of 40 to 50°C. 0.1 g of diethylamine was added to the mixture while maintaining the liquid temperature at 30 to 40°C, followed by stirring for 30 minutes. Then, 2.0 g of bis-(2,6-dimethoxybenzoyl)-2,4,4-trimethylpentylphosphine oxide as component (C) was added to the resulting mixture while controlling the liquid temperature at 50 to 60°C, followed by stirring until a uniform transparent liquid was prepared. The composition of the present invention comprising components (B) and (C) in proportions of 27.3 parts and 2.0 parts respectively for 100 parts of component (A) was prepared in this manner. The viscosity of the composition was 1100 cp at 40°C and the activation energy for fluidization of the composition was 50.3 kJ/mol. Also, the Young's modulus of the composition was 61 $kg/mm^2$, showing that the composition satisfied the fundamental characteristics required for the hard coating.

### Example 2

18.5 g of 2,4-tolylene diisocyanate, 0.02 g of 2,6-di-t-butyl-p-cresol, 0.06 g of dibutyltin dilaurate, and 19.9 g of tricyclodecane dimethanol dimethacrylate were placed in a reaction vessel equipped with a stirrer and ice-cooled until the liquid temperature was below 10°C while stirring. Then, 16.6 g of 2-hydroxyethyl acrylate was added dropwise to the mixture while controlling to maintain the liquid temperature below 20°C. After the addition was finished, the resulting mixture was further stirred for one hour to react. Next, 6.6 g of alkylene oxide addition diol of bisphenol A, which had a number average molecular weight of 400 and 38.3 g of polytetramethylene glycol having a number average molecular weight of 2000 were added to the reaction mixture and stirring of the resulting mixture was continued for 4 hours at a liquid temperature of 50 to 60°C. The reaction was terminated when the amount of residual isocyanate was below 0.1% by weight. To 100 g of the composition including components (A) and (B) prepared in this manner, 11.0 g of N-vinylcaprolactam, 9.5 g of isobornyl acrylate, and 8.6 g of lauryl acrylate as component (B) and 2.2 g of bis (2,6-methoxybenzoyl)-2,4,4-trimethylpentylphosphine oxide as component (C) were added. The mixture was stirred to control the liquid temperature at 50 to 60°C until a uniform transparent liquid was obtained. The composition of the present invention comprising components (B) and (C) in proportions of 29.1 parts and 2.2 parts respectively for 100 parts of component (A) was prepared in this manner. The viscosity of the composition was 1500 cp at 40°C and the activation energy for fluidization of the composition was 57.0 kJ/mol. Also, the Young's modulus of the composition was 75 $kg/mm^2$, showing that the composition satisfied the fundamental characteristics required for the hard coating.

### Example 3

400 g of toluene was placed in a reaction vessel equipped with a stirrer, condenser, and dropping funnel and heated to 100 to 110°C. A mixed solution of 368 g of 2-ethylhexyl acrylate, 20 g of methyl methacrylate, 85 g of glycidyl methacrylate, and 5 g of benzoyl peroxide was added dropwise to toluene for about two hours. After the dropwise addition, the mixture was reacted for further 6 hours. Then 43 g of acrylic acid, 0.5 g of hydroquinone, and 10 g of triethylbenzylammonium chloride were added to the reaction mixture to carry out an esterification reaction for 8 hours

at the same temperature. After completion of the reaction, 6 g of water and 2 g of triethylamine were added to carry out hydrolysis reaction. Then, unreacted water was distilled by azeotropic distillation with toluene to reduce the residual solvent to 0.05%. To 100 g of side chain (meth)acrylate group-containing polymerizable compound (A-2) obtained in this manner, 46.3 g of N-vinylcaprolactam, 45.2 g of tricyclodecane dimethanol dimethacrylate, and 15.9 g of isobornyl acrylate as component (B) were added and the mixture was stirred to control a liquid temperature at 50 to 60°C. Then, 2.0 g of bis-(2,6-dimethoxybenzoyl)-2,4,4-trimethylpentylphenyl oxide as component (C) was added to the resulting mixture while controlling the liquid temperature at 50 to 60°C, followed by stirring until a uniform transparent liquid was prepared. The composition was subjected to measurement by gel permeation chromatography (using an apparatus with a trademark AS-8020, manufactured by Tosoh Corporation) to calculate a number average molecular weight converted into styrene. As a result, the number average molecular weight of the composition was about 70,000. The composition of the present invention comprising components (B) and (C) in proportions of 107.4 parts and 2 parts respectively to 100 parts of side chain (meth)acrylate group-containing polymerizable compound (A-2) was prepared in this manner. The viscosity of the composition was 1000 cp at 40°C and the activation energy for fluidization of the composition was 52.3 kJ/mol. Also, the Young's modulus of the composition was 76 kg/mm$^2$, showing that the composition satisfied the fundamental characteristics required for the hard coating.

**Comparative Example 1**

28.5 g of 2,4-tolylene diisocyanate, 0.02 g of 2,6-di-t-butyl-p-cresol, 0.01 g of phenothiazine, 0.08 g of dibutyltin dilaurate, and 13.4 g of isobornyl acrylate were placed in a reaction vessel equipped with a stirrer and ice-cooled until the liquid temperature was below 10°C while stirring. Then, 27.0 g of 2-hydroxyethyl acrylate was added dropwise to the mixture while controlling to maintain the temperature below 20°C. After the addition was finished, the resulting mixture was further stirred for one hour to react. Next, 30.9 g of polytetramethylene glycol having a number average molecular weight of 650 was added to the reaction mixture and stirring of the resulting mixture was continued for 5 hours at a liquid temperature of 50 to 60°C. It was estimated that the reaction was completed when the amount of residual isocyanate was below 0.1% by weight. To 100 g of the composition including components (A) and (B) prepared in this manner were added 10 g of isobornyl acrylate as component (B) and 3.3 g of bis-(2,6-dimethoxybenzoyl)-2,4,4-trimethylpentylphosphine oxide as component (C), followed by stirring at 50 to 60°C, to obtain a composition. The viscosity of the composition was 4500 cp at 40°C and the activation energy for fluidization of the composition was 85.3 kJ/mol. Also, the Young's modulus of the composition was 80 kg/mm$^2$.

**Comparative Example 2**

9.6 g of isobornyl acrylate (component (B)), 23.0 g of 2,4-tolylene diisocyanate, 0.03 g of 2,6-di-t-butyl-p-cresol, 0.01 g of phenothiazine, and 0.08 g of dibutyltin dilaurate were placed in a reaction vessel equipped with a stirrer and ice-cooled until the liquid temperature was below 10°C while stirring. Then, 20.1 g of hydroxyethyl acrylate was added dropwise to the mixture while controlling the temperature below 20°C. After the addition was finished, the resulting mixture was further stirred for one hour to react. Next, 36.0 g of polytetramethylene glycol having a number average molecular weight of 2000 and 11.3 g of ethylene oxide addition bisphenol A (trademark: DA400, manufactured by Mitsubishi Chemical Corp.) was added to the reaction mixture and stirring of the resulting mixture was continued for 3 hours at a liquid temperature of 50 to 60°C. It was estimated that the reaction was completed when the amount of residual isocyanate was below 0.1% by weight. To 100 g of the composition including components (A) and (B) prepared in this manner, 10.1 g of lauryl acrylate, 25.3 g of tricyclodecane dimethanol dimethacrylate, and 7.5 g of N-vinylcaprolactam as component (B) and 3.3 g of bis-(2,6-dimethoxybenzoyl)-2,4,4-trimethylpentylphosphine oxide as component (C) were added, followed by stirring at 50 to 60°C, to obtain a composition. The viscosity of the composition was 1800 cp at 40°C and the activation energy for fluidization of the composition was 70 kJ/mol. Also, the Young's modulus of the composition was 61 kg/mm$^2$.

**Manufacturing Example**

(Production of primary coating layer)

A resin composition to be used as a primary coating for optical fiber was prepared according to the following process. In the evaluation test described below, the resin composition was subjected to evaluation of the application characteristics in a high speed drawing process.

8.7 g of 2,4-tolylene diisocyanate, 0.002 g of 2,6-di-t-butyl-p-cresol, 0.63 g of dibutyltin dilaurate, 0.006 g of phenothiazine, and 21.2 g of isobornyl acrylate were placed in a reaction vessel equipped with a stirrer and ice-cooled until the liquid temperature was below 10°C while stirring. Then, 3.8 g of 2-hydroxyethyl acrylate was added dropwise

to the mixture while controlling the liquid temperature below 20°C. After the addition was finished, the resulting mixture was further stirred for one hour to react. Next, 65.6 g of polytetramethylene glycol having a number average molecular weight of 2000 was added to the reaction mixture and stirring of the resulting mixture was continued for 4 hours at a liquid temperature of 50 to 60°C. It was estimated that the reaction was completed when the amount of residual isocyanate was below 0.1% by weight. To 100 g of the composition prepared in this manner, 14.1 g of isobornyl acrylate, 6.3 g of N-vinylcaprolactam, 7.3 g of lauryl acrylate, and 0.3 g of 2,2-thio-diethylenebis[3-(3,5-di-t-butyl-4-hydroxyphenyl)propionate were added and then 0.1 g of diethylamine was added while controlling the liquid temperature at 40 to 50°C. Further, 1.3 g of bis(2,6-dimethoxybenzoyl)-2,4,4-trimethylpentylphosphine oxide and 1.3 g of 2-hydroxy-2-methyl-1-phenylpropane-1-one were added to the resulting mixture while controlling the liquid temperature at 50 to 60°C, followed by stirring until a uniform transparant liquid was obtained. Thus, a primary coating for optical fiber was produced.

**Evaluation test**

The activation energy for fluidization storage stability, and high speed drawing capability of each of the compositions prepared in the above Examples and Comparative Examples were evaluated according to the following method. The results are shown in Table 1.

(1) Measurement Of Viscosity

The viscosity of the liquid curable resin composition was measured at 40°C by a B-type viscometer (manufactured by Tokyo Keiki Co., Ltd.).

(2) Tension Test

The composition was irradiated with light at a dose of $1J/cm^2$ in an air atmosphere to form a film with a thickness of 200 μm. The produced film was cut into a strip to make a sample of 6 mm width and 2.5 mm length. A tension test was performed using an autograph (trademark: AGF1KND, manufactured by Shimadzu Corporation) under the conditions of a tension velocity of 5 mm/min at a temperature of 23°C. The Young's modulus was calculated from the tensile strength at a distortion of 2.5%.

(3) Activation Energy For Fluidization

The activation energy for fluidization was determind by the Andrade's viscosity formula:

$$V=A \times \exp(E/R \times K)$$

wherein:

V represents the viscosity, in Pascal seconds (1000 cps), as measured using a B-type viscometer (manufactured by Tokyo Keiki Co., Ltd.) at 25°C, 35°C, and 45°C;
A represents a constant calculated from the inclination of the graph formed by Arrhenius-plotting the relation of viscosity vs temperature;
E represents the activation energy in KJ/mol;
R represents the gas constant 8.3; and
K represents the absolute temperature, in ºK, at which the viscosity was measured.

(4) Evaluation Of Coatability At High Speed Drawing Process

The primary coating material prepared in the above manufacturing Example was applied to optical fiber using an optical fiber drawing apparatus (manufactured by Yoshida Kogyo K.K.) and was cured. An outer layer composed of each of the compositions prepared in Examples and Comparative Examples was formed over the primary coating.

The optical fiber drawing conditions were as follows.

The fiber diameter of the optical fiber having a core diameter of 150 μm was so designed that it had a diameter of 200 μm after the primary coating was applied to the core optical fiber and cured and a final diameter of 260 μm after each of the compositions prepared in the Examples and Comparative Examples was applied to the primary coating and cured. The fiber drawing speeds were designed to be 600 m/min, 900 m/min, and 1200 m/min. The composition

was cured using a UV lamp (trademark: SMX, Power: 3.5 kW, manufactured by ORC). Variations in the diameter after the application and curing were measured using a laser outer diameter measuring device (manufactured by Anritsu Corporation). The cases where the variations in the fiber diameter was within a range of +/- 1.0 μm and out of this range were rated as "pass" and "not pass" respectively.

Table 1

| | | Example | | | Comp. Example | |
|---|---|---|---|---|---|---|
| | | 1 | 2 | 3 | 1 | 2 |
| Viscosity at 40°C (Pascal seconds) (cps) | | 1.1 (1100) | 1.5 (1500) | 1.0 (1000) | 4.5 (4500) | 1.8 (1800) |
| Young's modulus ($kg/mm^2$) | | 61 | 75 | 76 | 80 | 65 |
| Activation energy for fluidization (kJ/mol) | | 50.3 | 57.0 | 52.3 | 85.3 | 70 |
| Coatability | Drawing speed | | | | | |
| | 600 m/min | Pass | Pass | Pass | Pass | Pass |
| | 900 m/min | Pass | Pass | Pass | Not Pass | Pass |
| | 1200 m/min | Pass | Pass | Pass | Not Pass | Not Pass |

It is clearly confirmed from the results shown in Table 1 that the liquid curable resin composition of the present invention possesses basic characteristics required for the hard coating and exhibits excellent coatability even if the fiber drawing speed is high. On the other hand, the composition of Comparative Example 1 exhibited poor coatability at a drawing speed of 900 m/min or more because its viscosity and activation energy for fluidization are out of the range defined in the present invention. The composition of Comparative Example 2 also showed poor coatability at a drawing speed of 1200 m/min or more because its activation energy for fluidization are out of the range defined in the present invention.

As mentioned above, the liquid curable resin composition of the present invention exhibits excellent coatability at high speed drawing. The productivity can be improved if the liquid curable resin composition of the present invention is used as an optical fiber coating material.

## Claims

**1.** A liquid curable resin composition comprising:

(A) a polymerizable oligomer or polymer having at least one (meth)acrylate group in a molecule;
(B) a reactive diluent having a number average molecular weight of less than 1,000 and a viscosity lower than component (A); and
(C) a polymerization initiator,

wherein the viscosity of the liquid curable resin composition is in a range of from 0.5 to 3 Pascal seconds (500 to 3000 cps) at 40°C and the activation energy for fluidization is in a range of 1 to 60 kJ/mol.

**2.** The composition according to claim 1, wherein the viscosity is about 1 Pascal seconds (1000 cps) or higher.

**3.** The composition according to any one of claims 1-2, wherein the viscosity is about 2 Pascal seonds (2000 cps) or less.

**4.** The composition acording to claims 1-3, wherein the activation energy for fluidization is about 10 kJ/mol or higher.

**5.** The composition according to any one of claims 1-4, wherein component A has a molecular weight of about 500 or higher, and on average at least 1.6 (meth)acrylate groups per molecule.

**6.** The composition according to any one of claims 1-5, wherein component A is predominately a terminal (meth)acrylate group-containing compound.

7. The composition according to any one of claims 1-5, wherein the component A is predominately a side-chain (meth)acrylate group containing compound.

8. The composition according to any one of claims 1-7, wherein the composition comprises, relative to 100 parts by weight of component A, 10-200 parts by weight of component B, and 0.1-10 parts by weight of component C.

9. The composition according to any one of claims 1-8, wherein the composition, when cured, has a Young's modulus of 20-100 kg/mm$^2$.

10. Process for the preparation of a coated optical glass fiber comprising

i) coating an optical glass fiber with a liquid, radiation curable composition adapted to provide a soft primary coating
ii) further coating the primary coated optical glass fiber with a liquid, radiation curable composition according to any one of claims 1-9, adapted to provide a hard secondary coating

wherein the optical fiber is coated at a line speed of about 1000 m/min or higher, and wherein each coating is cured.

**Patentansprüche**

1. Flüssige, härtbare Harzzusammensetzung, umfassend:

(A) ein polymerisierbares Oligomer oder Polymer mit mindestens einer (Meth)acrylatgruppe im Molekül,
(B) ein reaktives Verdünnungsmittel mit einem Zahlenmittel des Molekulargewichts von weniger als 1000 und einer niedrigeren Viskosität als Komponente (A) und
(C) einen Polymerisationsinitiator,

wobei die Viskosität der flüssigen, härtbaren Harzzusammensetzung in einem Bereich von 0,5 bis 3 Pascalsekunden (500 bis 3000 cps) bei 40°C und die Aktivierungsenergie für die Verflüssigung in einem Bereich von 1 bis 60 kJ/mol liegt.

2. Zusammensetzung nach Anspruch 1, wobei die Viskosität etwa 1 Pascalsekunde (1000 cps) oder mehr beträgt.

3. Zusammensetzung nach einem der Ansprüche 1 bis 2, wobei die Viskosität etwa 2 Pascalsekunden (2000 cps) oder weniger beträgt.

4. Zusammensetzung nach den Ansprüchen 1 bis 3, wobei die Aktivierungsenergie für die Verflüssigung etwa 10 kJ/mol oder mehr beträgt.

5. Zusammensetzung nach einem der Ansprüche 1 bis 4, wobei die Komponente A ein Molekulargewicht von etwa 500 oder mehr aufweist und im Durchschnitt mindestens 1,6 (Meth)acrylatgruppen pro Molekül aufweist.

6. Zusammensetzung nach einem der Ansprüche 1 bis 5, wobei die Komponente A vorwiegend eine Verbindung ist, die endständige (Meth)acrylatgruppen enthält.

7. Zusammensetzung nach einem der Ansprüche 1 bis 5, wobei die Komponente A vorwiegend eine Verbindung ist, die (Meth)acrylatgruppen in der Seitenkette enthält.

8. Zusammensetzung nach einem der Ansprüche 1 bis 7, wobei die Zusammensetzung, bezogen auf 100 Gewichtsteile der Komponente A, 10 bis 200 Gewichtsteile der Komponente B und 0,1 bis 10 Gewichtsteile der Komponente C umfaßt.

9. Zusammensetzung nach einem der Ansprüche 1 bis 8, wobei die Zusammensetzung, wenn gehärtet, einen Elastizitätsmodul von 20 bis 100 kg/mm$^2$ aufweist.

10. Verfahren zur Herstellung einer beschichteten Lichtleitfaser aus Glas, umfassend

i) das Beschichten einer Lichtleitfaser aus Glas mit einer flüssigen, strahlungshärtbaren Zusammensetzung, die derart angepaßt ist, um eine weiche Primärbeschichtung bereitzustellen,
ii) das weitere Beschichten der primär beschichteten Lichtleitfaser aus Glas mit einer flüssigen, strahlungshärtbaren Zusammensetzung nach einem der Ansprüche 1 bis 9, die derart angepaßt ist, um eine harte zweite Beschichtung bereitzustellen,

wobei die Lichtleitfaser bei einer Liniengeschwindigkeit von etwa 1000 m/min oder mehr beschichtet wird und wobei jede Beschichtung gehärtet wird.

## Revendications

1. Composition de résine liquide durcissable comprenant :

(A) un oligomère ou un polymère polymérisable possédant au moins un groupe (méth)acrylate dans une molécule ;
(B) un diluant réactif possédant une masse moléculaire moyenne en nombre inférieure à 1 000 et une viscosité inférieure à celle du composant (A) ; et
(C) un amorceur de polymérisation,

dans laquelle la viscosité de la composition de résine liquide durcissable est située dans la gamme de 0,5 à 3 Pa.s (500 à 3 000 cps) à 40°C, et l'énergie d'activation pour la fluidisation est située dans la gamme de 1 à 60 kJ/mole.

2. Composition selon la revendication 1, dans laquelle la viscosité est d'environ 1 Pa.s (1 000 cps) ou plus.

3. Composition selon l'une quelconque des revendications 1 ou 2, dans laquelle la viscosité est d'environ 2 Pa.s (2 000 cps) ou moins.

4. Composition selon l'une quelconque des revendications 1 à 3, dans laquelle l'énergie d'activation pour la fluidisation est d'environ 10 kJ/mole ou plus.

5. Composition selon l'une quelconque des revendications 1 à 4, dans laquelle le composant A possède une masse moléculaire d'environ 500 ou plus, et, en moyenne, au moins 1,6 groupe (méth)acrylate par molécule.

6. Composition selon l'une quelconque des revendications 1 à 5, dans laquelle le composant A est principalement un composé contenant un groupe (méth)acrylate terminal.

7. Composition selon l'une quelconque des revendications 1 à 5, dans laquelle le composant A est principalement un composé contenant un groupe (méth)acrylate latéral.

8. Composition selon l'une quelconque des revendications 1 à 7, dans laquelle la composition comprend, par rapport à 100 parties en poids de composant A, 10 à 200 parties en poids de composant B et 0,1 à 10 parties en poids de composant C.

9. Composition selon l'une quelconque des revendications 1 à 8, dans laquelle la composition, une fois durcie, possède un module de Young de 20 à 100 kg/$mm^2$.

10. Procédé pour la préparation d'une fibre de verre optique revêtue comprenant les étapes consistant à :

i) revêtir une fibre de verre optique avec une composition liquide durcissable par irradiation appropriée pour fournir un revêtement primaire mou ;
ii) revêtir ensuite la fibre de verre optique possédant un revêtement primaire avec une composition liquide durcissable par irradiation selon l'une quelconque des revendications 1 à 9, appropriée pour fournir un second revêtement dur ;

dans lequel la fibre optique est revêtue à une vitesse de ligne d'environ 1 000 m/min ou plus, et dans lequel chaque revêtement est durci.